# EUROPÄISCHE PATENTANMELDUNG

(11) **EP 4 656 410 A1**
(43) Veröffentlichungstag der Anmeldung: **03.12.2025**
(21) Anmeldenummer: 25177776.9
(22) Anmeldetag: 20.05.2025
(51) Int. Cl.: B60C 9/20, B60C 9/22

(54) **FAHRZEUGREIFEN MIT RINGVERSTÄRKUNG**

(30) Priorität: 27.05.2024 DE 102024204897
(71) Anmelder: Continental Reifen Deutschland GmbH, 30175 Hannover (DE)
(72) Erfinder: Römer, Justus, 30175 Hannover (DE); Funk-Friedek, Sascha, 30175 Hannover (DE)
(74) Vertreter: Continental Corporation

(57) **Zusammenfassung**

Die Erfindung betrifft einen Fahrzeugreifen (10), umfassend: i) eine Reifengrundstruktur (12), ii) einen relativ zur der Reifengrundstruktur (12) in radialer Richtung außenliegenden Laufstreifen (14), und iii) einen zwischen dem Laufstreifen (14) und der Reifengrundstruktur (12) angeordneten, umlaufenden Verstärkungsring (16), wobei der Verstärkungsring (16) eine Vielzahl von in einer Kunststoffmatrix (18) eingebetteten Verstärkungsfasern (20) umfasst, wobei die Kunststoffmatrix (18) zu einem Massenanteil von 80 % oder mehr aus einem Matrixkunststoff besteht, der ausgewählt ist aus der Gruppe bestehend aus thermoplastischen Kunststoffen und duroplastischen Kunststoffen, bezogen auf die Masse der Kunststoffmatrix (18), wobei der Verstärkungsring (16) zu einem Massenanteil von 90 % oder mehr aus den Verstärkungsfasern (20) und dem Matrixkunststoff (18) besteht, bezogen auf die Masse des Verstärkungsrings (16), wobei der Verstärkungsring (16) in axialer Richtung eine Breite B_{R} aufweist, die 0,5*B_{L} oder mehr beträgt, wobei B_{L} die Breite des Laufstreifens (14) in axialer Richtung ist.

## Beschreibung

Die Erfindung betrifft einen Fahrzeugreifen mit einem umlaufenden Verstärkungsring sowie ein Verfahren zur Herstellung eines solchen Fahrzeugreifens. Offenbart wird zudem die Verwendung eines umlaufenden Verstärkungsrings bei der Herstellung von Fahrzeugluftreifens als Ersatz für Verstärkungslagen.

Bei modernen Fahrzeugreifen handelt es sich in vielen Fällen um Hochleistungsprodukte, welche umfassend an die Anforderungen des jeweiligen Einsatzzwecks angepasst sind. Neben der optimierten Materialauswahl der eingesetzten Gummiwerkstoffe weisen moderne Fahrzeugreifen regelmäßig komplexe konstruktive Aufbauten aus einer Vielzahl von Reifenkomponenten auf, die im Fahrzeugreifen ganz unterschiedliche Funktionen erfüllen und zusammen dazu beitragen, dass die Fahrzeugreifen insbesondere hinsichtlich der Fahrsicherheit, aber auch der Geräuschentwicklung und des Energieverbrauchs kontinuierlich weiterentwickelt werden.

Unter den Fahrzeugreifen kommt insbesondere den Fahrzeugluftreifen eine besondere Bedeutung zu. In diesen befinden sich zwischen der zugrunde liegenden Reifenkarkasse und dem Laufstreifen regelmäßig eine Vielzahl von Lagen, welche als Verstärkungslagen bezeichnet werden und die zumeist eine Vielzahl an gummierten Festigkeitsträgern aufweisen. Zu diesen Lagen gehören insbesondere die sogenannten Gürtellagen oder die Spulbandage.

Bei den meisten aus dem Stand der Technik bekannten Fahrzeugluftreifen übernehmen die Verstärkungslagen essentielle Funktionen, insbesondere hinsichtlich der Fahrsicherheit, der strukturellen Beständigkeit des Fahrzeugreifens und bei der Prävention von ungewollten Penetrationen des Reifenverbundes.

Trotz dieser Vorteile ist der Einsatz von Verstärkungslagen für Fahrzeugreifenkonstrukteure immer auch mit Herausforderungen verbunden. Insbesondere tragen die Verstärkungslagen einen erheblichen Anteil zum Gesamtgewicht des Reifens bei, was sich negativ auf den Treibstoffverbrauch auswirkt. Darüber hinaus haben die Verstärkungslagen und der in ihrer Gummierung eingesetzte Gummiwerkstoff einen Einfluss auf den zu erzielenden Rollwiderstand, wobei insbesondere weitere zu berücksichtigende Faktoren, wie die Adhäsion des Gummiwerkstoffs an die Festigkeitsträger, dazu führen, dass bei der Auswahl der Gummiwerkstoffe Zielkonflikte hinsichtlich der mechanischen Beständigkeit und den fahrtechnischen Eigenschaften bestehen.

Als besonders nachteilig wird beim Einsatz von Verstärkungslagen in vielen Fällen jedoch empfunden, dass diese mit einem erheblichen zusätzlichen Fertigungsaufwand verbunden sind. Die entsprechenden Verstärkungslagen müssen regelmäßig in separaten Herstellungsschritten hergestellt und zudem in zusätzlichen Arbeitsschritten in den Fahrzeugreifenrohling eingebracht werden, typischerweise zwischen der Reifenkarkasse und dem Laufstreifen. Diese Notwendigkeit ist dabei nicht nur mit einem erhöhten Arbeitsaufwand verbunden, sondern die viellagigen Aufbauten an Verstärkungslagen typischer Fahrzeugluftreifen stellen inhärent auch mögliche Schwachstellen dar, in deren Bereich es im späteren Verlauf zu einem Versagen kommen kann, weswegen im Stand der Technik regelmäßig umfassende zusätzliche konstruktive Maßnahmen vorgesehen werden, um solche Defekte zu vermeiden, insbesondere in der Form von sogenannten "Belt-Wraps" oder "Cushions", bei denen es sich um zusätzliche Elemente handelt, die die eingesetzten Verstärkungslagen schützen und/oder stabilisieren sollen.

Aus der bereits ohnehin relativ aufwendigen Herstellung und Einbringung von Verstärkungslagen in Fahrzeugreifenrohlinge folgt auch, dass in der Praxis nur wenig Möglichkeiten dazu bestehen, von den im Wesentlichen spiegelsymmetrischen Aufbauten mit einer zentralen Platzierung der Verstärkungslagen abzuweichen, wodurch es zumeist nur schwerlich möglich ist, in axialer Richtung ein asymmetrisches Eigenschaftsprofil der Verstärkungslagen einzustellen, auch wenn dies - insbesondere mit Blick auf Hochleistungsanwendungen - in vielen Fällen interessante Optionen zur gezielten Einstellung der Reifeneigenschaften eröffnen würde, insbesondere zur ortsaufgelösten Einstellung der Reifensteifigkeit, wie es beispielsweise auch von mehrkomponentigen Laufstreifen, welche entlang der lateralen Richtung unterschiedliche Eigenschaften aufweisen, bekannt ist.

Die primäre Aufgabe der vorliegenden Erfindung war es, die Nachteile des Standes der Technik auszuräumen oder zumindest zu verringern.

Insbesondere war es die Aufgabe der vorliegenden Erfindung, einen Fahrzeugreifen anzugeben, welcher in besonders zeit- und kosteneffizienter Art und Weise herstellbar ist, wobei es insbesondere wünschenswert war, dass sich die Zahl der für die Herstellung benötigten Komponenten sowie der erforderlichen Arbeitsschritte möglichst weitgehend reduzieren können lassen sollte.

Insoweit war es eine Maßgabe, dass die anzugebenen Fahrzeugreifen trotz des effizienteren Herstellungsverfahrens hinsichtlich der fahrtechnischen Eigenschaften mit klassischen Fahrzeugreifen zumindest vergleichbare und vorzugsweise sogar verbesserte Eigenschaften aufweisen sollten, insbesondere hinsichtlich der fahrsicherheitstechnischen Eigenschaften, beispielsweise hinsichtlich der Penetrationsresistenz.

Es war eine weitere Aufgabe der vorliegenden Erfindung, dass die anzugebenen Fahrzeugreifen bei vergleichbaren sonstigen Eigenschaften mit einem geringeren Gewicht ausführbar sein sollten als aus dem Stand der Technik bekannte Fahrzeugreifen, sodass mit den Fahrzeugreifen ein vorteilhafter Kraftstoffverbrauch erzielt werden kann.

Es war eine besondere Aufgabe der vorliegenden Erfindung, dass die anzugebenden Fahrzeugreifen einen Weg dafür eröffnen sollten, gezielt asymmetrische Eigenschaften des Fahrzeugreifens einzustellen, insbesondere ein asymmetrisches Steifigkeitsprofil, d. h. mit einer Steifigkeit, welche entlang der axialen Richtung des Fahrzeugreifens variiert. Insoweit war es eine ergänzende Maßgabe dass diese asymmetrischen Eigenschaften in den Fahrzeugreifen besonders präzise einstellbar sein sollten, wobei es eine wünschenswerte Vorgabe war, dass die präzise Einstellbarkeit mit einem möglichst wenig gesteigerten Aufwand in der Herstellung einhergehen sollte.

Zudem war es eine Aufgabe der vorliegenden Erfindung, ein vorteilhaftes Verfahren zur Herstellung der anzugebenden Fahrzeugreifen bereitzustellen.

Darüber hinaus war es eine sekundäre Aufgabe der vorliegenden Erfindung, auch eine Verwendung für den Einsatz eines Verstärkungsrings bei der Herstellung von Fahrzeugreifen als Ersatz für Verstärkungslagen anzugeben.

Die Erfinder der vorliegenden Erfindung haben nunmehr gefunden, dass sich die vorstehend beschriebenen Aufgaben überraschenderweise lösen lassen, wenn in einem Fahrzeugreifen zwischen der Reifengrundstruktur, üblicherweise in der Form einer Reifenkarkasse, und dem Laufstreifen ein umlaufender Verstärkungsring eingesetzt wird, welcher eine Vielzahl von in einer Kunststoffmatrix eingebetteten Verstärkungsfasern umfasst und dessen Kunststoffmatrix weit überwiegend aus einem Matrixkunststoff besteht, bei dem es sich um einen thermoplastischen oder duroplastischen Kunststoff handelt, sofern dieser Verstärkungsring hinreichend breit ausgeführt wird, wie es in den Ansprüchen definiert ist.

Überraschenderweise ist es hierdurch möglich, mit dem umlaufenden Verstärkungsring die sonst üblicherweise eingesetzten Verstärkungslagen zumindest weitgehend und in den meisten Fällen sogar vollständig, zu ersetzen, und dabei trotzdem einen vorteilhaften Fahrzeugreifen zu erhalten, dessen fahrtechnischen und fahrsicherheitstechnischen Eigenschaften mit denen von Fahrzeugreifen aus dem Stand der Technik zumindest vergleichbar und in vielen Fällen sogar verbessert sind. Hierdurch lässt sich der Fertigungsaufwand für entsprechende Fahrzeugreifen sowie der Bedarf an Einzelkomponenten in vorteilhafter Weise signifikant senken, sodass die Fahrzeugreifen in besonders zeit- und kosteneffizienter Weise hergestellt werden können. Darüber hinaus ist es vorteilhafterweise möglich, die entsprechenden Fahrzeugreifen in vielen Fällen deutlich leichter und mit einer höheren Umfangssteifigkeit auszuführen, was zu geringerem Kraftstoffverbrauch führt.

Als ganz besonderer Vorteil des Konzepts der vorliegenden Erfindung kann es gesehen werden, dass der eingesetzte Verstärkungsring in besonders effizienter Weise mit einem in axialer Richtung asymmetrischen Eigenschaftsprofil, insbesondere hinsichtlich der Dicke, versehen werden kann, wodurch es besonders effizient möglich ist, auch den Fahrzeugreifen mit einem entsprechenden Eigenschaftsverlauf entlang der axialen Richtung auszurüsten, wobei insbesondere eine besonders präzise Einstellung auch komplexer Gradienten dank der Möglichkeit zur gezielten Bearbeitung des Verstärkungsrings eröffnet wird.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren und Verwendungen ergeben sich aus den Merkmalen bevorzugter Fahrzeugreifen.

Insbesondere bevorzugte Ausführungsformen der Erfindung sind in den Ausführungsbeispielen offenbart. Besonders bevorzugte Ausführungsformen der Erfindung weisen dabei zwei oder mehr, bevorzugt drei oder mehr, ganz besonders bevorzugt vier oder mehr, der nachfolgend offenbarten bevorzugten Merkmale der Erfindung auf, welche auch in den Ausführungsbeispielen realisiert sind.

Die Erfindung betrifft einen Fahrzeugreifen, umfassend:
i) eine Reifengrundstruktur,
ii) einen relativ zur der Reifengrundstruktur in radialer Richtung außenliegenden Laufstreifen, und
iii) einen zwischen dem Laufstreifen und der Reifengrundstruktur angeordneten, umlaufenden Verstärkungsring, wobei der Verstärkungsring eine Vielzahl von in einer Kunststoffmatrix eingebetteten Verstärkungsfasern umfasst,

wobei die Kunststoffmatrix zu einem Massenanteil von 80 % oder mehr aus einem Matrixkunststoff besteht, der ausgewählt ist aus der Gruppe bestehend aus thermoplastischen Kunststoffen und duroplastischen Kunststoffen, bezogen auf die Masse der Kunststoffmatrix,
wobei der Verstärkungsring zu einem Massenanteil von 90 % oder mehr aus den Verstärkungsfasern und dem Matrixkunststoff besteht, bezogen auf die Masse des Verstärkungsrings,
wobei der Verstärkungsring in axialer Richtung eine Breite B_{R} aufweist, die 0,5*B_{L} oder mehr beträgt, wobei B_{L} die Breite des Laufstreifens in axialer Richtung ist.

Der Gegenstand der Erfindung ist ein Fahrzeugreifen, wobei Fahrzeugreifen an sich dem Fachmann im Bereich der Technik umfassend vertraut sind. Beispielhaft ist ein erfindungsgemäßer Fahrzeugreifen, wobei der Fahrzeugtreifen ein Nutzfahrzeugreifen oder PKW-Reifen, bevorzugt ein PKW-Reifen ist.

Nach Einschätzung der Erfinder eignet sich die Technologie der vorliegenden Erfindung insbesondere dafür, die konstruktive Ausgestaltung von Fahrzeugluftreifen zu verbessern. Jedoch sind in den letzten Jahren auch alternative Konstruktionskonzepte für Fahrzeugreifen vorgeschlagen worden, bei denen es sich nicht um klassische Fahrzeugluftreifen handelt, bei denen die vorliegende Erfindung aber trotzdem vorteilhaft eingesetzt werden kann. In diesen Fahrzeugreifen wird die den Laufstreifen tragende Struktur vielmehr durch ein komplexes Netz aus Verstrebungen gebildet. Solche Fahrzeugreifen werden vom Fachmann in Abgrenzung zu Fahrzeugluftreifen und Vollgummireifen allgemein auch als "luftlose Reifen" bezeichnet. Nach Einschätzung der Erfinder ist es grundsätzlich vorteilhaft, dass das erfindungsgemäße Konzept des Einsatzes eines Verstärkungsringes auch auf solche luftlosen Reifen adaptiert werden kann. Wegen der hohen Praxisrelevanz von Fahrzeugluftreifen ist es jedoch für im Wesentlichen alle Ausführungsformen bevorzugt, den erfindungsgemäßen Fahrzeugreifen als Fahrzeugluftreifen auszuführen. Denkbar ist somit ein erfindungsgemäßer Fahrzeugreifen, wobei der Fahrzeugtreifen ein Fahrzeugluftreifen oder ein luftloser Reifen, bevorzugt Fahrzeugluftreifen ist.

Der erfindungsgemäße Fahrzeugreifen umfasst zunächst eine Reifengrundstruktur, bei der es sich insbesondere um den Teil des Fahrzeugreifens handelt, welcher im späteren Einsatz den Kontakt zur Felge herstellen wird. In dem denkbaren Falle sogenannter luftloser Reifen umfasst die Grundstruktur insbesondere die Vielzahl von Gummiverstrebungen, durch die der Laufstreifen im späteren Einsatz von der Felge beabstandet wird. In dem für die Erfindung besonders bevorzugten Falle von Fahrzeugluftreifen handelt es sich bei der Reifengrundstruktur um die Reifenkarkasse des herzustellenden Fahrzeugluftreifens. Bevorzugt ist somit in der weit überwiegenden Zahl der Fälle ein erfindungsgemäßer Fahrzeugreifen, wobei die Reifengrundstruktur eine Reifenkarkasse ist.

Das Konzept einer Reifenkarkasse ist dem Fachmann im Gebiet der Technik umfassend bekannt und es kann als Vorteil der vorliegenden Erfindung gesehen werden, dass diese in der Ausgestaltung als Fahrzeugluftreifen hinsichtlich der spezifischen Ausgestaltung der Reifenkarkasse sehr flexibel ist, wobei insbesondere auch mehrlagige Reifenkarkassen mit zwei oder mehr Karkasslagen eingesetzt werden können. In Übereinstimmung mit dem fachmännischen Verständnis umfasst eine Reifenkarkasse Festigkeitsträger, welche in einem Gummiwerkstoff eingebettet sind, wobei die Ausgestaltung der Festigkeitsträger regelmäßig vom späteren Einsatzzweck der Fahrzeugreifen abhängt, insbesondere ob diese für Pkw oder Nutzfahrzeuge zum Einsatz kommen sollen. In diesem Fall handelt es sich somit regelmäßig um einen erfindungsgemäßen Fahrzeugreifen, wobei die Reifenkarkasse einen oder mehrere in einem ersten Gummiwerkstoff eingebettete erste Festigkeitsträger umfasst. Bevorzugt ist dabei ein erfindungsgemäßer Fahrzeugreifen, wobei die ersten Festigkeitsträger ausgewählt sind aus der Gruppe bestehend aus textilen Festigkeitsträgern und metallischen Festigkeitsträgern, bevorzugt textilen Festigkeitsträgern.

Neben der Reifengrundstruktur umfasst der erfindungsgemäße Fahrzeugreifen einen Laufstreifen, welcher in Übereinstimmung mit der fachmännischen Erwartung für den späteren Fahrbahnkontakt vorgesehen ist und entsprechend die in radialer Richtung äußerste Lage des Fahrzeugreifens bildet. Es kann als Vorteil der vorliegenden Erfindung gesehen werden, dass diese hinsichtlich der spezifischen Ausgestaltung des Laufstreifens sehr flexibel ist und insoweit auf aus dem Stand der Technik bekannte Lösungen zurückgegriffen werden kann. Als besonderer Vorteil ist hierbei jedoch zu erwähnen, dass es durch den Einsatz des spezifischen Verstärkungsrings in vorteilhafter Weise möglich ist, auch komplexe Verläufe der Reifensteifigkeit durch eine Ausgestaltung des Verstärkungsrings umzusetzen, sodass in vorteilhafter Weise die Notwendigkeit entfällt, entsprechende asymmetrische Eigenschaftsprofile durch den Einsatz komplexer Laufstreifenaufbauten zu realisieren. Hierdurch lässt sich in vorteilhafter Weise die Zeit- und Kosteneffizienz der Herstellung weiter steigern. Bevorzugt ist grundsätzlich ein erfindungsgemäßer Fahrzeugreifen, wobei der Laufstreifen umfasst:
ii.1) eine für den Fahrbahnkontakt vorgesehene Decklage, und
ii.2) eine relativ zur Decklage in radialer Richtung innenliegende Grundlage.

Ein besonders großer Vorteil der vorliegenden Erfindung ist darin zu sehen, dass dank des Einsatzes des Verstärkungsrings auf eine Vielzahl von Reifenbauteilen, welche sonst üblicherweise zwischen der Reifengrundstruktur und dem Laufstreifen angeordnet sind, insbesondere auf die Verstärkungslagen, verzichtet werden kann. Der Fachmann versteht, dass es für im Wesentlichen sämtliche Ausführungsformen bevorzugt ist, diese Vorteile der Erfindung dadurch zu nutzen, dass die Zahl der Bauteile zwischen der Reifengrundstruktur und dem Laufstreifen entsprechend auch niedrig gehalten wird, wobei es insbesondere bevorzugt ist, möglichst weitgehend auf den Einsatz von Verstärkungslagen zu verzichten, um die Vorteile der vorliegenden Erfindung möglichst umfassend zu realisieren. Bevorzugt ist entsprechend ein erfindungsgemäßer Fahrzeugreifen, wobei der umlaufende Verstärkungsring die Reifengrundstruktur, bevorzugt die Reifenkarkasse, kontaktiert, und/oder wobei der umlaufende Verstärkungsring den Laufstreifen kontaktiert, bevorzugt die Grundlage des Laufstreifens. Bevorzugt ist zusätzlich oder alternativ auch ein erfindungsgemäßer Fahrzeugreifen, wobei die Zahl der zwischen der Reifengrundstruktur, bevorzugt der Reifenkarkasse, und dem Laufstreifen angeordneten Verstärkungslagen zwei oder weniger, bevorzugt eins oder weniger, beträgt, wobei zwischen der Reifengrundstruktur, bevorzugt der Reifenkarkasse, und dem Laufstreifen bevorzugt gar keine Verstärkungslagen angeordnet sind. Bevorzugt ist wiederum zusätzlich oder alternativ ein erfindungsgemäßer Fahrzeugreifen, wobei der Fahrzeugtreifen zwischen dem umlaufenden Verstärkungsring und der Reifengrundstruktur, bevorzugt der Reifenkarkasse, nicht mehr als eine, bevorzugt gar keine, Verstärkungslage umfasst, und/oder wobei der Fahrzeugreifen zwischen dem umlaufenden Verstärkungsring und dem Laufstreifen nicht mehr als eine, bevorzugt gar keine, Verstärkungslage umfasst.

Der Ausdruck "Verstärkungslagen" ist für den Fachmann im Bereich der Technik klar. Im Rahmen der vorliegenden Erfindung meint der Ausdruck "Verstärkungslagen" dabei solche umlaufendend und unterhalb des Laufstreifens angeordneten Lagen, die über einen oder mehrere gummierte Festigkeitsträger verfügen, insbesondere metallische Festigkeitsträger, die im Rahmen der vorliegenden Erfindung zur Abgrenzung von der Reifenkarkasse als zweite Festigkeitsträger bezeichnet werden. Es handelt sich somit bei den vorstehenden Ausführungen um einen erfindungsgemäßen Fahrzeugreifen, wobei Verstärkungslagen solche Lagen sind, die einen oder mehrere zweite Festigkeitsträger umfassen, welche in einen zweiten Gummiwerkstoff eingebettet sind. Beispielhaft ist insoweit ein erfindungsgemäßer Fahrzeugreifen, wobei die zweiten Festigkeitsträger ausgewählt sind aus der Gruppe bestehend aus metallischen Festigkeitsträgern. Bevorzugt ist zusätzlich oder alternativ ein erfindungsgemäßer Fahrzeugreifen, wobei Verstärkungslagen solche Lagen sind, die ausgewählt sind aus der Gruppe bestehend aus Gürtellagen und Spulbandagen.

Der Fachmann hat in der Praxis keine Probleme, die Karkasslagen, welche gummierte erste Festigkeitsträger umfassen, von den Verstärkungslagen zu unterscheiden, auch wenn diese ebenfalls im Wesentlichen durch gummierte Festigkeitsträger gebildet werden. Im Unterschied zu Karkasslagen verlaufen Verstärkungslagen nämlich regelmäßig im Wesentlichen lediglich unterhalb des Laufstreifens bzw. unterhalb der für den Fahrbahnkontakt vorgesehenen Aufstandsfläche, wohingegen Karkasslagen sich in jedem Fall bis in die Seitenwandbereiche ziehen, in der weit überwiegenden Zahl der Fälle jedoch zumindest bis in die Wulstbereiche erstrecken und dort in vielen Fällen sogar zur Ausbildung eines Lagenumschlags umgeschlagen werden.

Auch der Ausdruck "Gummiwerkstoff" ist für den Fachmann klar und bezeichnet das durch Vernetzung einer vernetzbaren Kautschukmischung herstellbare elastomere Material. Typisch ist somit ein erfindungsgemäßer Fahrzeugreifen, wobei der erste Gummiwerkstoff und/oder der zweite Gummiwerkstoff herstellbar sind durch Vulkanisation einer ersten vulkanisierbaren Kautschukmischung bzw. zweiten vulkanisierbaren Kautschukmischung. Typisch ist in diesen Fällen auch ein erfindungsgemäßer Fahrzeugreifen, wobei der erste vulkanisierbare Kautschukmischung und/oder die zweite vulkanisierbare Kautschukmischung einen oder mehrere Dienkautschuke umfassen. Beispielhaft ist dabei ein erfindungsgemäßer Fahrzeugreifen, wobei der eine oder die mehreren Dienkautschuke ausgewählt sind aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, Nitril-Kautschuk, Acrylat-Kautschuk, Styrol-Isopren-Butadien-Terpolymer, Butylkautschuk und Halobutylkauschuk, wobei der eine oder die mehreren Dienkautschuke bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR), wobei der eine oder die mehreren Dienkautschuke besonders bevorzugt ausgewählt ist aus der Gruppe bestehend aus lösungspolymerisiertem Styrol-Butadien-Kautschuk und emulsionspolymerisiertem Styrol-Butadien-Kautschuk.

Ein wesentlicher Aspekt der vorliegenden Erfindung ist es, dass ein umlaufender Verstärkungsring eingesetzt wird. Aus der vorstehenden Definition geht dabei hervor, dass dieser Verstärkungsring hinreichend breit gewählt wird, sodass er einen signifikanten Teil der Fläche unterhalb des Laufstreifens einnehmen kann. Nach Einschätzung der Erfinder zeigen sich die Vorteile des Einsatzes des Verstärkungsrings nur, wenn dieser hinreichend breit ausgebildet wird. Insbesondere ist es bei einer zu schmalen Ausführung des Verstärkungsrings nicht effizient möglich, auf den Einsatz von Verstärkungslagen weitgehend zu verzichten. Die minimale Breite des Verstärkungsrings hängt dabei von den Grunddimensionen des Fahrzeugreifens ab. Um dies abzubilden ist es zielführend, die Breite des Verstärkungsrings über die Breite des Laufstreifens zu definieren. Bevorzugt ist dabei ein erfindungsgemäßer Fahrzeugreifen, wobei der Verstärkungsring in axialer Richtung eine Breite B_{R} aufweist, die 0,6*B_{L} oder mehr, bevorzugt 0,7*B_{L} oder mehr, besonders bevorzugt 0,8*B_{L} oder mehr beträgt, ganz besonders bevorzugt 0,9*B_{L} oder mehr, beträgt, wobei B_{L} die Breite des Laufstreifens in axialer Richtung ist. Beispielhaft für übliche PKW-Reifen ist dabei ein erfindungsgemäßer Fahrzeugreifen, wobei der Verstärkungsring in axialer Richtung eine Breite B_{R} aufweist, die 100 mm oder mehr, bevorzugt 150 mm oder mehr, besonders bevorzugt 170 mm oder mehr beträgt, ganz besonders bevorzugt 200 mm oder mehr.

Der Verstärkungsring besteht erfindungsgemäß weit überwiegend aus Verstärkungsfasern, welche in einer Kunststoffmatrix eingebettet sind. Auch wenn es hierbei denkbar wäre, dass der Verstärkungsring neben den Verstärkungsfasern und dem Matrixkunststoff weitere Elemente umfasst, ist es nach Einschätzung der Erfinder für die weit überwiegende Zahl der Anwendungen bevorzugt, den Verstärkungsring möglichst weitgehend aus dem Matrixkunststoff und den Verstärkungsfasern auszuführen. Bevorzugt ist entsprechend ein erfindungsgemäßer Fahrzeugreifen, wobei der Verstärkungsring zu einem Massenanteil von 95 % oder mehr, bevorzugt von 98 % oder mehr, besonders bevorzugt 99 % oder mehr, ganz besonders bevorzugt im Wesentlichen zu 100 %, aus den Verstärkungsfasern und dem Matrixkunststoff besteht, bezogen auf die Masse des Verstärkungsrings.

Auch wenn die Ausbildung des Verstärkungsrings aus Verstärkungsfasern und einem Matrixkunststoff auf den ersten Blick Ähnlichkeit mit dem von Verstärkungslagen bekannten Aufbau hat, unterscheidet sich der Verstärkungsring doch signifikant von üblichen Verstärkungslagen.

Ein wesentlicher Unterschied ist darin zu sehen, dass die Kunststoffmatrix, d. h. die Ummantelung der Verstärkungsfasern, aus einem thermoplastischen oder duroplastischen Kunststoff besteht, wobei der Einsatz von thermoplastischen Kunststoffen nach Einschätzung der Erfinder sowohl unter fertigungstechnischen Aspekten als auch mit Blick auf die Verarbeitungseigenschaften für die weit überwiegende Zahl der Ausführungsformen bevorzugt ist. Bevorzugt ist somit ein erfindungsgemäßer Fahrzeugreifen, wobei der Matrixkunststoff ausgewählt ist aus der Gruppe bestehend aus thermoplastischen Kunststoffen.

In Übereinstimmung mit dem fachmännischen Verständnis handelt es sich bei dem Matrixkunststoff um ein solches Material, welches im Vergleich zu den üblicherweise in Verstärkungseinlagen eingesetzten Gummiwerkstoffen kein Elastomer ist und infolgedessen im Wesentlichen nicht elastisch verformbar ist. Es handelt sich somit in anderen Worten um einen erfindungsgemäßen Fahrzeugreifen, wobei der Matrixkunststoff kein Elastomer ist.

Nach Einschätzung der Erfinder ist es wesentlich, dass die Kunststoffmatrix hinsichtlich ihrer Eigenschaften von dem Einsatz des Matrixkunststoffs dominiert wird. Gleichzeitig ist es jedoch auch denkbar, dass die Eigenschaften des Verstärkungsrings durch die gezielte Beimischung kleinerer Mengen anderer Kunststoffe, inklusive der Beimischung kleiner Elastomeranteile, weiter optimiert werden, sodass die Untergrenze für den Massenanteil des Matrixkunststoffs an der Kunststoffmatrix im Rahmen der vorliegenden Erfindung bei 80 % definiert wird. Gleichzeitig schlagen die Erfinder vor, dass es besonders zielführend ist, die Kunststoffmatrix möglichst weitgehend aus dem Matrixkunststoff auszubilden. Bevorzugt ist demgemäß ein erfindungsgemäßer Fahrzeugreifen, wobei die Kunststoffmatrix zu einem Massenanteil von 90 % oder mehr, bevorzugt von 95 % oder mehr, besonders bevorzugt 98 % oder mehr, ganz besonders bevorzugt im Wesentlichen zu 100 %, aus dem Matrixkunststoff besteht, bezogen auf die Masse der Kunststoffmatrix.

Den Erfindern der vorliegenden Erfindung ist es gelungen, in eigenen Versuchen besonders geeignete Materialien für den Einsatz als Matrixkunststoff zu identifizieren, wobei insbesondere mit Polyamiden ausgezeichnete Ergebnisse erzielt wurden. Bevorzugt ist nämlich ein erfindungsgemäßer Fahrzeugreifen, wobei der Matrixkunststoff ausgewählt ist aus der Gruppe bestehend aus Polyamiden, bevorzugt ausgewählt ist aus der Gruppe bestehend aus PA6, PA6.6 und aromatischen Polyamiden, besonders bevorzugt ausgewählt ist aus der Gruppe bestehend aus PA6 und PA6.6.

Neben der Kunststoffmatrix umfasst der Verstärkungsring Verstärkungsfasern, wobei eine breite Palette an Fasern denkbar ist. Jedoch ist es den Erfindern gelungen, besonders geeignete Materialien für die Faserverstärkung der Kunststoffmatrix zu identifizieren. Bevorzugt ist nämlich ein erfindungsgemäßer Fahrzeugreifen, wobei die Verstärkungsfasern ausgewählt sind aus der Gruppe bestehen aus Kunststofffaser, Glasfasern, Kohlefasern und Naturfaser, beispielsweise Hanffasern und/oder Flachsfaser, bevorzugt ausgewählt sind aus der Gruppe bestehen aus Glasfasern und Kohlefasern.

Auch wenn es denkbar wäre, die Faserverstärkung der Kunststoffmatrix mit kurzen Fasern zu realisieren, erachten es die Erfinder mit Blick auf die resultierenden Fahreigenschaften entsprechender erfindungsgemäßer Fahrzeugreifen und die Haltbarkeit des Verstärkungsrings für besonders bevorzugt, lange Verstärkungsfasern einzusetzen, welche sich besonders bevorzugt mehrmals über den gesamten Umfang des Verstärkungsrings erstrecken, wobei insbesondere eine möglichst parallele Wicklung zu besonders vorteilhaften Leistungseigenschaften führt. Bevorzugt ist somit ein erfindungsgemäßer Fahrzeugreifen, wobei die Verstärkungsfasern eine Länge von 0,5*U_{R} oder mehr, bevorzugt 1,0*U_{R} oder mehr, besonders bevorzugt 1,5*U_{R} oder mehr, besonders bevorzugt 2,0*U_{R} oder mehr, aufweisen, wobei U_{R} der auf den Mittelpunkt des Verstärkungsrings bezogene Umfang des umlaufenden Verstärkungsrings ist. Bevorzugt ist zusätzlich oder alternativ auch ein erfindungsgemäßer Fahrzeugreifen, wobei die Verstärkungsfasern in zwei oder mehr, bevorzugt drei oder mehr, besonders bevorzugt vier oder mehr, Ringwicklungen um den Umfang des Verstärkungsrings herumlaufen. Bevorzugt ist wiederum zusätzlich oder alternativ ein erfindungsgemäßer Fahrzeugreifen, wobei die Verstärkungsfasern zumindest teilweise, bevorzugt überwiegend, besonders bevorzugt im Wesentlichen vollständig, so angeordnet sind, dass die Faserrichtung mit der Umfangsrichtung des umlaufenden Verstärkungsrings einen kleinsten Schnittwinkel von 15° oder weniger, bevorzugt 10° oder weniger, besonders bevorzugt 5° oder weniger, ganz besonders bevorzugt 2° oder weniger, einschließen, wobei die Verstärkungsfasern insbesondere bevorzugt im Wesentlichen parallel zur Umfangsrichtung des umlaufenden Verstärkungsrings verlaufen.

Im Rahmen der Entwicklung der vorliegenden Erfindung ist es den Erfindern gelungen, für die Gesamtdimensionierung des Verstärkungsrings neben der Breite auch vorteilhafte Bereiche für die Dicke zu identifizieren. Bevorzugt ist nämlich ein erfindungsgemäßer Fahrzeugreifen, wobei der Verstärkungsring in radialer Richtung eine Dicke D_{R} aufweist, die im Bereich von 0,5 bis 10 mm, bevorzugt im Bereich von 0,75 bis 7,5 mm, besonders bevorzugt im Bereich von 1,0 bis 5 mm, liegt.

Als ganz besonders bevorzugte Ausführungsform erachten es die Erfinder, dass die Dicke des Verstärkungsrings entlang der axialen Richtung, d. h. quer zur Umfangsrichtung des Verstärkungsrings variiert wird, um ein gerichtetes Eigenschaftsprofil im Fahrzeugreifen zu erzeugen, insbesondere hinsichtlich der Steifigkeit in der axialen Richtung, hierdurch ist es in vorteilhafter Weise möglich, ohne eine aufwendige Ausgestaltung des Laufstreifens eine vorteilhafte Asymmetrie zu erzeugen, mit der der Fahrzeugreifen gezielt an die spezifischen Anwendungserfordernisse eingestellt werden kann, wodurch insbesondere die Herstellung von laufrichtungsgebundenen Fahrzeugreifen, welche sich insbesondere auf einer Seite des Fahrzeuges einsetzen lassen, möglich wird. Die solide Ausführung des Verstärkungsrings und insbesondere dessen Herstellung in dem wie nachfolgend offenbarten bevorzugten Verfahren erlaubt es dabei besonders gezielt und mit niedrigem zusätzlichen Herstellungsaufwand, entsprechende Dickenvariationen auszubilden. Besonders bevorzugt ist somit ein erfindungsgemäßer Fahrzeugreifen, wobei die Dicke des Verstärkungsrings D_{R} entlang der axialen Richtung variiert, wobei die Dicke des Verstärkungsrings D_{R} bevorzugt derart entlang der axialen Richtung variiert, dass der Verstärkungsring keine orthogonal zur axialen Richtung stehende Spiegelebene aufweist.

Es kann als Vorteil der vorliegenden Erfindung gesehen werden, dass der einzusetzende Verstärkungsring prinzipiell auch mehrteilig ausgeführt werden kann. Beispielsweise ist es zumindest theoretisch denkbar, dass der Verstärkungsring, welcher sich beispielsweise über 80 % der Breite des Laufstreifens erstreckt, durch vier einzelne, jeweils umlaufende kleinere Verstärkungsringe zusammengesetzt wird, welche jeweils 20 % der Breite des Laufstreifens aufweisen, wobei in diesem Fall die jeweiligen Breitenanteile kombiniert werden, um zu überprüfen, ob die erforderliche Mindestbreite erfüllt ist. Zumindest theoretisch wäre es sogar denkbar, den Verstärkungsring nach Art einer Schalung aus mehreren teilkreisförmigen Teilsegmenten zusammenzusetzen, beispielsweise indem der Verstärkungsring an vier über den Umfang voneinander beabstandeten Positionen geteilt vorliegt und zur Ausbildung des gesamten Verstärkungsrings stückweise dadurch ausgebildet wird, dass die entsprechenden Teilsegmente auf Stoß auf die Reifengrundstruktur gesetzt werden. Auch wenn dies theoretisch möglich ist, ist es nach Einschätzung der Erfinder für im Wesentlichen alle Ausführungsformen bevorzugt, wenn der Verstärkungsring so solide wie möglich und als einstückiger Ring ausgeführt wird, der insbesondere über den Umfang verteilt keine Schwachstellen aufweist, an denen zwei Teilelemente eines größeren Rings sich berühren. Bevorzugt ist entsprechend ein erfindungsgemäßer Fahrzeugreifen, wobei der umlaufende Verstärkungsring einstückig ist, wobei der umlaufende Verstärkungsring bevorzugt aus eine Vielzahl an stoffschlüssig miteinander verbundenen Ringwicklungen aus einem bahnförmigen Materialstrang besteht, wobei der Materialstrang die Verstärkungsfasern und die Kunststoffmatrix umfasst.

Im Zuge der Entwicklung der vorliegenden Erfindung haben die Erfinder ein besonders vorteilhaftes Verfahren entwickelt, mit dem der umlaufende Verstärkungsring hergestellt werden kann. Hierfür kann nämlich auf die Wicklung eines bahnförmigen Materialstrangs zurückgegriffen werden, in dem die in der Kunststoffmatrix eingebetteten Verstärkungsfasern vorliegen. In Übereinstimmung mit dem fachmännischen Verständnis kann hierbei zur Gewährleistung einer hinreichenden Verarbeitbarkeit im Falle von duroplastischen Kunststoffen auch ein Vorgängermaterial verwendet werden, welches sich erst durch spätere Aushärtung in den duroplastischen Kunststoff umsetzen lässt. Aus den so hergestellten oder bereitgestellten Materialsträngen kann der Verstärkungsring in effizienter Art und Weise dadurch ausgebildet werden, dass ein zylindrischer Körper, beispielsweise eine Reifenaufbautrommel, mit dem bahnförmigen Materialstrang umwickelt wird, um eine Vielzahl von Ringwicklungen zu erzeugen. Der so hergestellte Verstärkungsring kann anschließend, potenziell nach Aushärtung eines Vorgängermaterials der Kunststoffmatrix zum Erhalt des duroplastischen Werkstoffs, einfach abgenommen und im Verfahren zur Herstellung des Fahrzeugreifens eingesetzt werden. Das entsprechende Verfahren stellt dabei eine leistungsfähige Alternative zu anderen denkbaren Methoden der Herstellung dar, beispielsweise zu Spritzgussverfahren. Der große Vorteil kann hierbei darin gesehen werden, dass das wicklungsbasierte Herstellungsverfahren nicht nur in besonders zeit- und kosteneffizienter Art und Weise durchführbar ist, sondern dass hierfür auch im Wesentlichen solche Vorrichtungen ausreichend sind, welche im Bereich der Reifenfertigung ohnehin zumeist eingesetzt werden, beispielsweise Reifenaufbautrommeln und Spulvorrichtungen. Hierdurch entfällt in vorteilhafter Weise die Notwendigkeit, spezifische Spritzgusswerkzeuge herzustellen, wobei günstigerweise sehr leicht unterschiedliche strukturelle Ausgestaltungen des Verstärkungsrings durch einfache Variation der Wicklungsparameter hergestellt werden können. Bevorzugt ist vor diesem Hintergrund ein erfindungsgemäßer Fahrzeugreifen, wobei der umlaufende Verstärkungsring herstellbar oder hergestellt ist mit einem Verfahren umfassend die folgenden Teilschritte:
a1) Herstellen oder Bereitstellen eines bahnförmigen Materialstrangs, wobei der Materialstrang ein oder mehrere von in der Kunststoffmatrix und/oder einem Vorgängermaterial der Kunststoffmatrix eingebetteten Verstärkungsfasern umfasst,
wobei der Materialstrang zu einem Massenanteil von 90 % oder mehr aus den Verstärkungsfasern und dem Matrixkunststoff und/oder einem Vorgängermaterial des Matrixkunststoffs besteht, bezogen auf die Masse des Materialstrangs,
a2) Umwickeln einer zylindrischen Körpers, bevorzugt einer Aufbautrommel, mit dem bahnförmigen Materialstrang zum Erzeugen einer Vielzahl von Ringwicklungen, und
a3) Ablösen des umlaufenden Verstärkungsrings vom zylindrischen Körper.

Nach Einschätzung der Erfinder ergeben sich in vorteilhafter Weise gerade für sehr einfache Wicklungsverfahren ausgezeichnete Ergebnisse in den späteren Eigenschaften des Fahrzeugreifens. Auch wenn es zumindest theoretisch denkbar wäre, die einzelnen Wicklungen teilweise überlappen zu lassen, oder zwischen diesen gezielt Lücken einzustellen, ergeben sich nach Einschätzung der Erfinder die vorteilhaftesten Ergebnisse dann, wenn die Ringwicklungen auf Stoß gelegt werden. Bevorzugt ist folglich auch ein erfindungsgemäßer Fahrzeugreifen, wobei in axialer Richtung benachbarte Ringwicklungen in einer Wickellage einander auf Stoß berühren.

Die Erfinder schlagen insoweit vor, dass sich besonders stabile Ausgestaltungen des Verstärkungsrings, die insbesondere auch flexibel an unterschiedliche Bedürfnisse der Dicke des Verstärkungsrings angepasst werden können, erhalten lassen, wenn ein vergleichsweise dünner Materialstrang eingesetzt wird, sodass die Einstellung der gewünschten Enddicke des Verstärkungsrings durch die Übereinanderanordnung mehrerer Wicklungen erzielt werden kann. Bevorzugt ist somit ein erfindungsgemäßer Fahrzeugreifen, wobei der bahnförmige Materialstrang eine mittlere Dicke im Bereich von 0,1 bis 1,0 mm, bevorzugt im Bereich von 0,15 bis 0,8 mm, besonders bevorzugt im Bereich von 0,2 bis 0,6 mm, aufweist. Bevorzugt ist zusätzlich oder alternativ auch ein erfindungsgemäßer Fahrzeugreifen, wobei die Vielzahl von Ringwicklungen teilweise in radialer Richtung übereinander angeordnet sind, so dass zwei oder mehr, bevorzugt vier oder mehr, besonders bevorzugt sechs oder mehr, in radialer Richtung übereinander angeordnete Wickellagen ausgebildet werden. Bevorzugt ist wiederum zusätzlich oder alternativ zudem ein erfindungsgemäßer Fahrzeugreifen, wobei die Ringwicklungen der zweiten Wickellage unmittelbar auf die Ringwicklungen der in radialer Richtung unterliegenden Wickellage aufgebracht werden.

Besonders vorteilhafte Haltbarkeiten der resultierenden Verstärkungsringe werden dabei erreicht, wenn die Wickellagen zumindest teilweise alternierend angeordnet werden. Bevorzugt ist demnach ein erfindungsgemäßer Fahrzeugreifen, wobei die Ringwicklungen einer Wickellage in axialer Richtungen versetzt zu den Ringwicklungen der in radialer Richtung innenliegenden und/oder außenliegenden, Wickellagen angeordnet sind.

Wie vorstellend erläutert, ist der Einsatz von thermoplastischen Matrixkunststoffen bevorzugt, sodass in vorteilhafter Weise der Einsatz von Vorgängermaterialien und deren Aushärtung entfallen kann. Bevorzugt ist anknüpfend an die vorstehenden Ausführungen beim bevorzugten Einsatz von Thermoplasten ein erfindungsgemäßer Fahrzeugreifen, wobei der umlaufende Verstärkungsring herstellbar oder hergestellt ist mit einem Verfahren umfassend die folgenden Teilschritte:
a1t) Herstellen oder Bereitstellen eines bahnförmigen Materialstrangs, wobei der Materialstrang ein oder mehrere von in der Kunststoffmatrix eingebetteten Verstärkungsfasern umfasst,
wobei der Materialstrang zu einem Massenanteil von 90 % oder mehr aus den Verstärkungsfasern und dem Matrixkunststoff besteht, bezogen auf die Masse des Materialstrangs,
a2t) Umwickeln einer zylindrischen Körpers, bevorzugt einer Aufbautrommel, mit dem bahnförmigen Materialstrang zum Erzeugen einer Vielzahl von Ringwicklungen, und
a3t) Ablösen des umlaufenden Verstärkungsrings vom zylindrischen Körper.

Allerdings schlagen die Erfinder vor, dass zum Erreichen einer vorteilhaften strukturellen Integrität des hergestellten Verstärkungsrings die Verarbeitung bevorzugt zumindest teilweise bei erhöhten Temperaturen stattfinden sollte, beispielsweise bei 160 °C oder mehr, bevorzugt 180 °C oder mehr, besonders bevorzugt 200 °C oder mehr, sodass es zu einer stoffschlüssigen Verbindung zwischen den einzelnen Wicklungen kommen kann. Neben einer nachträglichen thermischen Behandlung des aufgewickelten Verstärkungsrings kommt hierbei insbesondere die Wicklung bei erhöhten Temperaturen als besonders vorteilhafte Verfahrensführung infrage, wobei die erhöhte Temperatur in synergistischer Weise auch die Verarbeitbarkeit der Materialstränge verbessert und es beim Wickeln automatisch zu einer stoffschlüssigen Verbindung zu den unterliegenden Wicklungen kommt.

Die Erfindung betrifft auch ein Verfahren zur Herstellung eines Fahrzeugreifens, insbesondere eines erfindungsgemäßen Fahrzeugreifens, umfassend die Verfahrensschritte:
a) Herstellen eines umlaufenden Verstärkungsrings, wobei der Verstärkungsring eine Vielzahl von in einer Kunststoffmatrix eingebetteten Verstärkungsfasern umfasst,
   wobei die Kunststoffmatrix zu einem Massenanteil von 80 % oder mehr aus einem Matrixkunststoff besteht, der ausgewählt ist aus der Gruppe bestehend aus thermoplastischen Kunststoffen und duroplastischen Kunststoffen, bezogen auf die Masse der Kunststoffmatrix,
   wobei der Verstärkungsring zu einem Massenanteil von 90 % oder mehr aus den Verstärkungsfasern und dem Matrixkunststoff besteht, bezogen auf die Masse des Verstärkungsrings,
b) Herstellen oder Bereitstellen einer Reifengrundstruktur oder eines Reifengrundstrukturrohlings,
c) Anordnen des zuvor hergestellten Verstärkungsrings in radialer Richtung oberhalb der Reifengrundstruktur beziehungsweise des Reifengrundstrukturrohlings, und
d) Anbringen eines Laufstreifens oder eines Laufstreifenrohlings, so dass der Verstärkungsring in radialer Richtung zwischen der Reifengrundstruktur und dem Laufstreifen beziehungsweise dem Laufstreifenrohling angeordnet ist,
wobei der Verstärkungsring in axialer Richtung eine Breite B_{R} aufweist, die 0,5*B_{L} oder mehr beträgt, wobei B_{L} die Breite des Laufstreifens beziehungsweise des Laufstreifenrohling in axialer Richtung ist.

Das erfindungsgemäße Verfahren ist vorteilhaft, da mit ihm die Herstellung der erfindungsgemäßen Fahrzeugreifen möglich ist. Auch wenn es theoretisch möglich wäre, den Verstärkungsring unmittelbar auf der Reifengrundstruktur auszubilden, beispielsweise indem dieser auf einer Reifenaufbautrommel oberhalb einer Reifenkarkasse aufgewickelt wird, erachten es die Erfinder sowohl mit Blick auf die Leistungseigenschaften des damit herstellbaren Fahrzeugreifens als auch der Effizienz des Herstellungsverfahrens als besonders bevorzugt, den Verstärkungsring in einem separaten Verfahren herzustellen. Neben alternativen Herstellungsmethoden, beispielsweise in Spritzgussverfahren, erachten die Erfinder hierbei die wie vorstehend offenbarte Wicklung als besonders vorteilhaften Ansatz, um zu leistungsfähigen Verstärkungsringen zu gelangen. Bevorzugt ist prinzipiell ein erfindungsgemäßes Verfahren, wobei die Reifengrundstruktur auf einer Reifenaufbautrommel hergestellt oder bereitgestellt wird,

In der vorstehenden Definition wird das Herstellungsverfahren nicht nur in Bezug auf die Reifengrundstruktur und den Laufstreifen erläutert, sondern auch in Bezug auf einen Reifengrundstrukturrohling bzw. einen Laufstreifenrohling. In Übereinstimmung mit dem fachmännischen Verständnis trägt diese Formulierung dem Umstand Rechnung, dass die im Rahmen des Herstellungsverfahrens eingesetzte Reifengrundstruktur bzw. der Laufstreifen in dem Moment der Verbindung der Komponenten, insbesondere dem Einbringen des Verstärkungsrings, möglicherweise noch nicht den finalen Zustand aufweisen, den sie im erfindungsgemäßen Fahrzeugreifen haben werden. Auch wenn es beispielsweise möglich ist, beispielsweise im Rahmen einer Runderneuerung von Reifen, vorvulkanisierte Komponenten einzusetzen, wird es in einer Vielzahl der Anwendungsfälle erst bei einer anschließenden Vulkanisation von zuvor unvulkanisierten Komponenten zu der Ausbildung der Gummiwerkstoffe und zur Finalisierung des Fahrzeugreifens kommen. Die Reifengrundstruktur und der Laufstreifen werden bis dahin in großen Teilen noch nicht aus einem Gummiwerkstoff bestehen, sondern aus einer vulkanisierbaren Kautschukmischung, welche erst im Zuge der Vulkanisation in den Gummiwerkstoff überführt wird.

Besonders bevorzugt ist ein erfindungsgemäßes Verfahren, wobei das Herstellen des umlaufenden Verstärkungsring die folgenden Teilschritte umfasst:
a1) Herstellen oder Bereitstellen eines bahnförmigen Materialstrangs, wobei der Materialstrang ein oder mehrere von in der Kunststoffmatrix eingebetteten Verstärkungsfasern umfasst,
wobei der Materialstrang zu einem Massenanteil von 90 % oder mehr aus den Verstärkungsfasern und dem Matrixkunststoff besteht, bezogen auf die Masse des Materialstrangs,
a2) Umwickeln einer zylindrischen Körpers, bevorzugt einer Aufbautrommel, mit dem bahnförmigen Materialstrang zum Erzeugen einer Vielzahl von Ringwicklungen, und
a3) Ablösen des umlaufenden Verstärkungsrings vom zylindrischen Körper.

Offenbart wird auch die Verwendung eines umlaufenden Verstärkungsrings bei der Herstellung von Fahrzeugreifen mit einem Laufstreifen, als Ersatz für Verstärkungslagen, insbesondere Gürtellagen und Spulbandagen, wobei der Verstärkungsring eine Vielzahl von in einer Kunststoffmatrix eingebetteten Verstärkungsfasern umfasst, wobei die Kunststoffmatrix zu einem Massenanteil von 80 % oder mehr aus einem Matrixkunststoff besteht, der ausgewählt ist aus der Gruppe bestehend aus thermoplastischen Kunststoff und duroplastischen Kunststoff, bezogen auf die Masse der Kunststoffmatrix, wobei der Verstärkungsring zu einem Massenanteil von 90 % oder mehr aus den Verstärkungsfasern und dem Matrixkunststoff besteht, bezogen auf die Masse des Verstärkungsrings, wobei der Verstärkungsring in axialer Richtung eine Breite B_{R} aufweist, die 0,5*B_{L} oder mehr beträgt, wobei B_{L} die Breite des Laufstreifens in axialer Richtung ist.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine schematische Querschnittsdarstellung entlang eines radialen Schnittes durch einen erfindungsgemäßen Fahrzeugreifen in einer bevorzugten Ausführungsform; und
- Fig. 2: schematische Querschnittsdarstellung entlang eines radialen Schnittes durch einen erfindungsgemäß einsetzbaren Verstärkungsring.

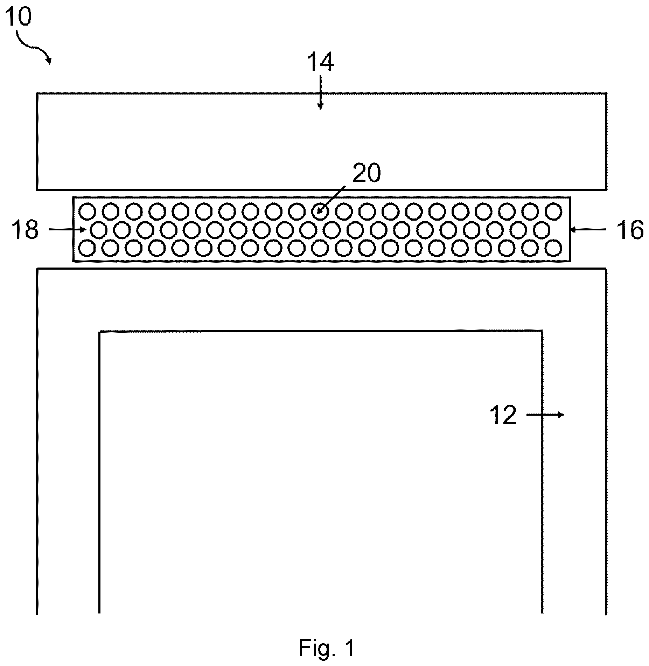

Fig. 1 zeigt eine sehr schematische Querschnittsdarstellung entlang eines radialen Schnittes durch einen erfindungsgemäßen Fahrzeugreifen 10 in einer bevorzugten Ausführungsform.

In dem gezeigten Beispiel der Fig. 1 handelt es sich um einen Fahrzeugluftreifen, welcher als Reifengrundstruktur 12 eine Reifenkarkasse aufweist, in der eine Vielzahl an textilen Festigkeitsträgern in einem Gummiwerkstoff eingebettet sind. Oberhalb der Reifengrundstruktur 12, d. h. in radialer Richtung außen, ist ein Laufstreifen 14 angeordnet, welcher sich über den gesamten Umfang des Fahrzeugreifens 10 erstreckt. Zwischen der Reifengrundstruktur 12 und dem Laufstreifen 14 sind keine Verstärkungslagen angeordnet, sondern lediglich ein umlaufender Verstärkungsring 16, welcher im gezeigten Beispiel der Fig. 1 mit einer entlang der axialen Richtung, d. h. von links nach rechts, mit einer mittleren Dicke von etwa 2 mm ausgeführt ist. In einer besonders bevorzugten Ausführungsform variiert die Dicke des Verstärkungsrings 16 entlang der axialen Richtung, d. h. in der Horizontalen der Fig. 1, um dadurch ein asymmetrisches Eigenschaftsprofil einzustellen.

Im gezeigten Beispiel in der Fig. 1 entspricht die Breite des Verstärkungsrings 16 in axialer Richtung etwa 87 % der Breite des Laufstreifens 14 in axialer Richtung.

Der Verstärkungsring 16 umfasst eine Vielzahl von Verstärkungsfasern 20, welche in einer Kunststoffmatrix 18 eingebettet sind. Die Verstärkungsfasern 20 sind im gezeigten Beispiel aus langen Glasfasern ausgebildet, die im Verstärkungsring 16 weitgehend parallel zueinander verlaufen und sich mehrfach um den Umfang des Fahrzeugreifens 10 herum erstrecken.

Die Kunststoffmatrix 18 wird im gezeigten bevorzugten Beispiel vollständig durch PA6, d. h. Polycaprolactam, gebildet.

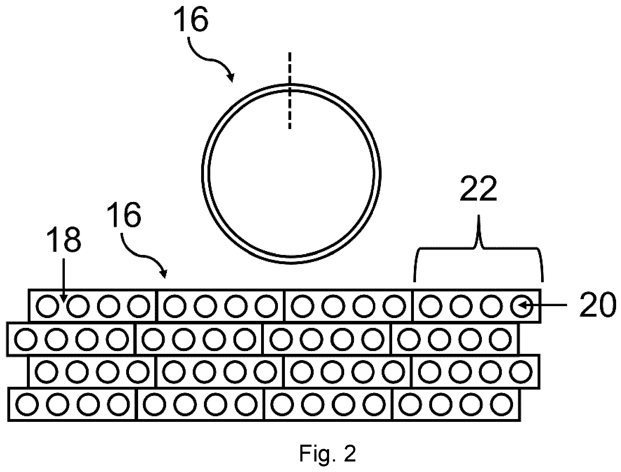

Fig. 2 zeigt eine schematische Querschnittsdarstellung entlang eines radialen Schnittes durch einen erfindungsgemäß einsetzbaren Verstärkungsring 16, wobei die ringförmige Gestalt des Verstärkungsrings 16 im oberen Teil der Abbildung ersichtlich ist, indem der Blick auf die Seite des Verstärkungsrings, d. h. entlang der axialen Richtung, erfolgt, wobei der Schnitt durch den Verstärkungsring 16, welcher im unteren Teil der Fig. 2 visualisiert ist, durch eine gestrichelte Linie angezeigt wird.

Im unteren Teil der Fig. 2 ist zu erkennen, dass der Verstärkungsring 16 durch Wicklung eines bahnförmigen Materialstrangs 22 ausgeformt wurde, in dem die Verstärkungsfasern 20 jeweils in der Kunststoffmatrix 18 eingebettet sind. In der schematischen Visualisierung ist eine Wicklungsstruktur zu erkennen, bei der durch 16-fache Wicklung des bahnförmigen Materialstrangs 22 eine Querschnittsdarstellung erhalten wird, bei der schematisch vier Wickellagen aus jeweils vier Wicklungen des Materialstrangs 22 in radialer Richtung unmittelbar übereinander angeordnet sind, wobei die Ringwicklung der Wickellagen jeweils in axialer Richtung versetzt zu den Ringwicklungen der angrenzenden Wickellagen angeordnet sind.

In einem bevorzugten erfindungsgemäßen Verfahren kann ein entsprechender Verstärkungsring 16 hergestellt werden durch Wicklung des bahnförmigen Materialstrangs 22 auf einer Aufbautrommel, wobei die Wicklung beispielsweise bei einer erhöhten Temperatur von 200 °C durchgeführt wird, sodass die Verarbeitung des PA6 erleichtert wird und die Aufwicklung auf die unterliegenden Wickellagen dazu führt, dass sich eine stoffschlüssige Verbindung zu den neuen Wicklungen des Materialstrangs 22 ausbildet.

### Bezugszeichenliste

- 10: Fahrzeugreifen
- 12: Reifengrundstruktur
- 14: Laufstreifen
- 16: Verstärkungsring
- 18: Kunststoffmatrix
- 20: Verstärkungsfasern
- 22: bahnförmiger Materialstrang

## Patentansprüche

1. Fahrzeugreifen (10), umfassend:
i) eine Reifengrundstruktur (12),
ii) einen relativ zur der Reifengrundstruktur (12) in radialer Richtung außenliegenden Laufstreifen (14), und
iii) einen zwischen dem Laufstreifen (14) und der Reifengrundstruktur (12) angeordneten, umlaufenden Verstärkungsring (16), wobei der Verstärkungsring (16) eine Vielzahl von in einer Kunststoffmatrix (18) eingebetteten Verstärkungsfasern (20) umfasst,
wobei die Kunststoffmatrix (18) zu einem Massenanteil von 80 % oder mehr aus einem Matrixkunststoff besteht, der ausgewählt ist aus der Gruppe bestehend aus thermoplastischen Kunststoffen und duroplastischen Kunststoffen, bezogen auf die Masse der Kunststoffmatrix (18),
wobei der Verstärkungsring (16) zu einem Massenanteil von 90 % oder mehr aus den Verstärkungsfasern (20) und dem Matrixkunststoff (18) besteht, bezogen auf die Masse des Verstärkungsrings (16),
wobei der Verstärkungsring (16) in axialer Richtung eine Breite B_{R} aufweist, die 0,5*B_{L} oder mehr beträgt, wobei B_{L} die Breite des Laufstreifens (14) in axialer Richtung ist.

2. Fahrzeugreifen (10) nach Anspruch 1, wobei die Reifengrundstruktur (12) eine Reifenkarkasse ist.

3. Fahrzeugreifen (10) nach einem der Ansprüche 1 oder 2, wobei der umlaufende Verstärkungsring (16) die Reifengrundstruktur (12) kontaktiert, und/oder wobei der umlaufende Verstärkungsring (16) den Laufstreifen (14) kontaktiert,

4. Fahrzeugreifen (10) nach einem der Ansprüche 1 bis 3, wobei die Zahl der zwischen der Reifengrundstruktur (12) und dem Laufstreifen (14) angeordneten Verstärkungslagen zwei oder weniger beträgt.

5. Fahrzeugreifen (10) nach einem der Ansprüche 1 bis 4, wobei der Matrixkunststoff ausgewählt ist aus der Gruppe bestehend aus thermoplastischen Kunststoffen.

6. Fahrzeugreifen (10) nach einem der Ansprüche 1 bis 5, wobei der Matrixkunststoff ausgewählt ist aus der Gruppe bestehend aus Polyamiden.

7. Fahrzeugreifen (10) nach einem der Ansprüche 1 bis 6, wobei die Verstärkungsfasern (20) ausgewählt sind aus der Gruppe bestehen aus Kunststofffaser, Glasfasern, Kohlefasern und Naturfaser.

8. Fahrzeugreifen (10) nach einem der Ansprüche 1 bis 7, wobei die Dicke des Verstärkungsrings (16) D_{R} entlang der axialen Richtung variiert.

9. Fahrzeugreifen (10) nach einem der Ansprüche 1 bis 8, wobei der umlaufende Verstärkungsring (16) herstellbar oder hergestellt ist mit einem Verfahren umfassend die folgenden Teilschritte:
a1) Herstellen oder Bereitstellen eines bahnförmigen Materialstrangs (22), wobei der Materialstrang (22) ein oder mehrere von in der Kunststoffmatrix (18) und/oder einem Vorgängermaterial der Kunststoffmatrix (18) eingebetteten Verstärkungsfasern (20) umfasst,
wobei der Materialstrang (22) zu einem Massenanteil von 90 % oder mehr aus den Verstärkungsfasern (20) und dem Matrixkunststoff und/oder einem Vorgängermaterial des Matrixkunststoffs besteht, bezogen auf die Masse des Materialstrangs (22),
a2) Umwickeln einer zylindrischen Körpers, bevorzugt einer Aufbautrommel, mit dem bahnförmigen Materialstrang (22) zum Erzeugen einer Vielzahl von Ringwicklungen, und
a3) Ablösen des umlaufenden Verstärkungsrings (16) vom zylindrischen Körper.

10. Verfahren zur Herstellung eines Fahrzeugreifens (10), umfassend die Verfahrensschritte:
a) Herstellen eines umlaufenden Verstärkungsrings (16), wobei der Verstärkungsring (16) eine Vielzahl von in einer Kunststoffmatrix (18) eingebetteten Verstärkungsfasern (20) umfasst,
wobei die Kunststoffmatrix (18) zu einem Massenanteil von 80 % oder mehr aus einem Matrixkunststoff besteht, der ausgewählt ist aus der Gruppe bestehend aus thermoplastischen Kunststoffen und duroplastischen Kunststoffen, bezogen auf die Masse der Kunststoffmatrix (18),
wobei der Verstärkungsring (16) zu einem Massenanteil von 90 % oder mehr aus den Verstärkungsfasern (20) und dem Matrixkunststoff (18) besteht, bezogen auf die Masse des Verstärkungsrings (16),
b) Herstellen oder Bereitstellen einer Reifengrundstruktur (12) oder eines Reifengrundstrukturrohlings,
c) Anordnen des zuvor hergestellten Verstärkungsrings (16) in radialer Richtung oberhalb der Reifengrundstruktur (12) beziehungsweise des Reifengrundstrukturrohlings, und
d) Anbringen eines Laufstreifens (14) oder eines Laufstreifenrohlings, so dass der Verstärkungsring in radialer Richtung zwischen der Reifengrundstruktur (12) und dem Laufstreifen (14) beziehungsweise dem Laufstreifenrohling angeordnet ist,
wobei der Verstärkungsring (16) in axialer Richtung eine Breite B_{R} aufweist, die 0,5*B_{L} oder mehr beträgt, wobei B_{L} die Breite des Laufstreifens (14) beziehungsweise des Laufstreifenrohlings in axialer Richtung ist.
